# EUROPEAN PATENT APPLICATION

(11) **EP 4 667 386 A1**
(43) Date of publication of application: **24.12.2025**
(21) Application number: 24182680.9
(22) Date of filing: 17.06.2024
(51) Int. Cl.: B65G 1/04, B65G 1/06, B65G 1/137

(54) **PORT**

(71) Applicant: AutoStore Technology AS, 5578 Nedre Vats (NO)
(72) Inventor: Cui, Shu, 5578 Nedre Vats (NO)
(74) Representative: Kilburn & Strode LLP

(57) **Abstract**

The disclosure relates to a port (520) for an automated storage and retrieval system (500), the automated storage and retrieval system (500) comprising a storage grid (100) configured to store one or more storage containers therein, the port (520) comprising: a first conveyor belt system (506) configured to carry at least one of the one or more storage containers from a first position (504) of the storage grid (100) towards a second position (508) of the storage grid (100); wherein the port (520) is configured to: receive, at the first position (504), a storage container from the storage grid (100) onto the first conveyor belt system (506); and return, at the second position (508), from the first conveyor belt system (506), the storage container to the storage grid (100).

## Description

### TECHNICAL FIELD

The disclosure relates to a port. More particularly, it relates to a port for an automated storage and retrieval system, an automated storage and retrieval system comprising the same, and a method of storage and retrieval of items in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or storage containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

To pick goods from or pack goods into a bin that is stacked within the grid, the bin must first be removed from the grid. To remove the bin from the grid, it may be delivered by a robotic container-handling vehicle to a port at the periphery of the grid. At the port, the bin is presented to a human operator for picking or packing, before being returned to the grid in the opposite manner (i.e. the robotic handling vehicle collects the bin from the port and returns it to the grid).

A known port comprises a robotic swing arm which moves a bin from an area of the grid to an area outside the grid (e.g. a picking area) where humans. The robotic swing arm is capable of moving one or two bins at a time. After picking goods from and/or packing goods into the one or two bins, said bin or bins must be returned to the grid by the robotic swing arm before a further one or two bins can be removed from the grid for picking and/or packing.

One or more aspects of the invention of the present application are set out in the claims.

The terms 'bin' and 'storage container' may be used interchangeably throughout the disclosure. The skilled person would appreciate that any reference to a bin may be considered as a storage container, and that any reference to a storage container may be considered as a bin.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a plan view of a port according to an embodiment of the present disclosure;
Fig. 6 shows a plan view of an alternative port according to an embodiment of the present disclosure;
Fig. 7 is a flowchart of a method for the storage and retrieval of items in an automated storage and retrieval system according to the present disclosure.

### DETAILED DESCRIPTION

In overview, the disclosure relates to a port for an automated storage and retrieval system configured to store one or more bins in a storage grid as described in more detail below. The port comprises a conveyor belt system that is configured to carry bins from one position of the storage grid to another position.

Robotic container-handling vehicles travelling along the top of the grid (as described below) can deposit a bin onto a conveyor belt of the conveyor belt system at a first position of the grid, for example via a column of the grid that is designed for a robot to lower a storage container therethrough. The storage containers are then carried away from the grid by the conveyor belt system, before the same conveyor belt system carries the storage containers back to the grid, at a different position (i.e. to a different column) of the grid. In other words, the conveyor belt system provides a continuous circuit for storage containers to be dropped off, carried along the conveyor belt system, and picked back up and returned to the grid.

Whilst the storage containers are travelling along the conveyor belt system they may be picked (i.e. items taken out of the storage containers), restocked (i.e. items placed in the storage containers), or any other suitable action may be taken in relation to the bins, for example cleaning. Multiple bins (e.g. 5, 10, 20, 50 or more) may be carried by the conveyor belt system at the same time. Human or robotic operators stationed adjacent to the conveyor belt system can pick from each storage container on the conveyor belt system simultaneously or substantially simultaneously. In this way, the conveyor belt system that carries bins from one position of the grid to another position of the grid facilitates efficient processing of storage containers (e.g. picking, restocking, cleaning, and so on), since a high number of storage containers can be processed at once. Moreover, the conveyor belt system may be continually moving, reducing downtime associated with system resets and thereby improving the rate at which bins can be extracted from, processed, and returned to the grid.

In general, aspects and embodiments of the disclosure provide a solution for efficient processing of storage containers belonging to an automated storage and retrieval system, in which the throughput of storage containers is increased compared to conventional techniques for processing storage containers.

### Automated storage and retrieval system overview

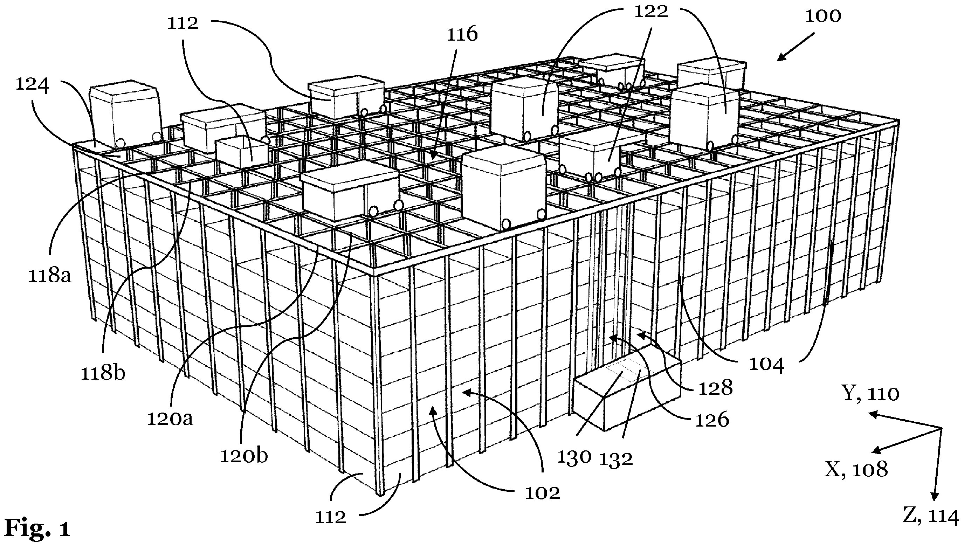

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

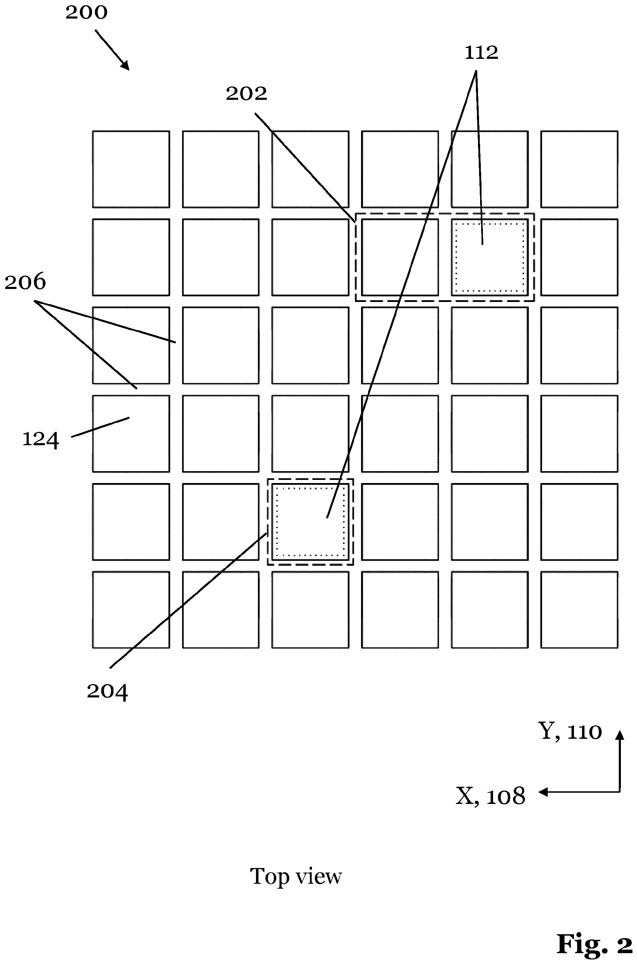

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

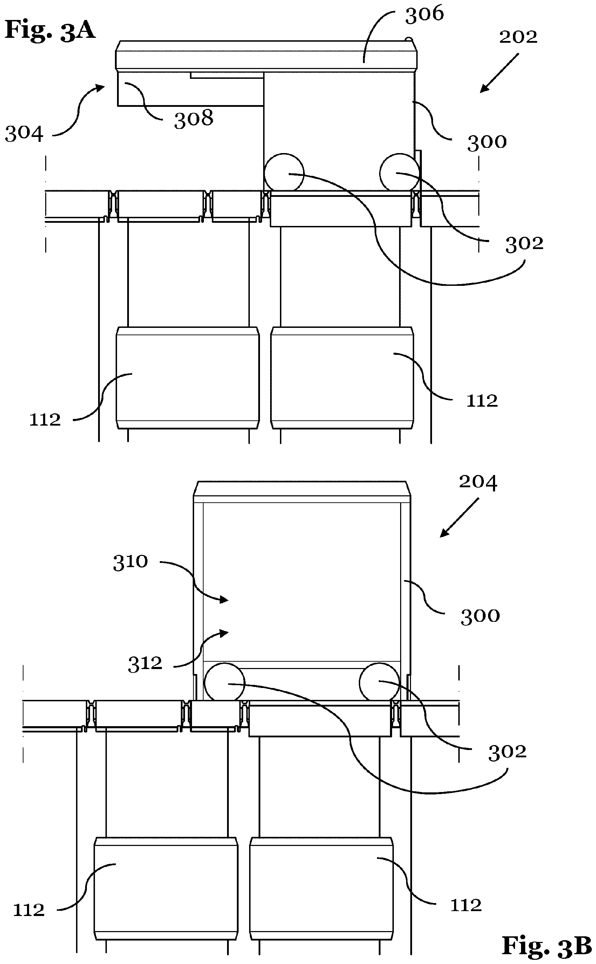

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

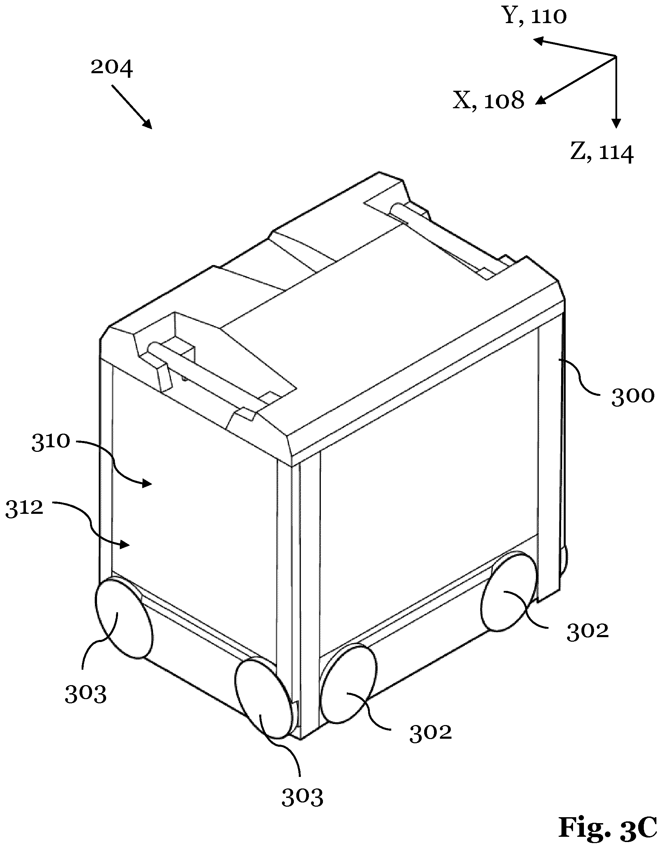

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

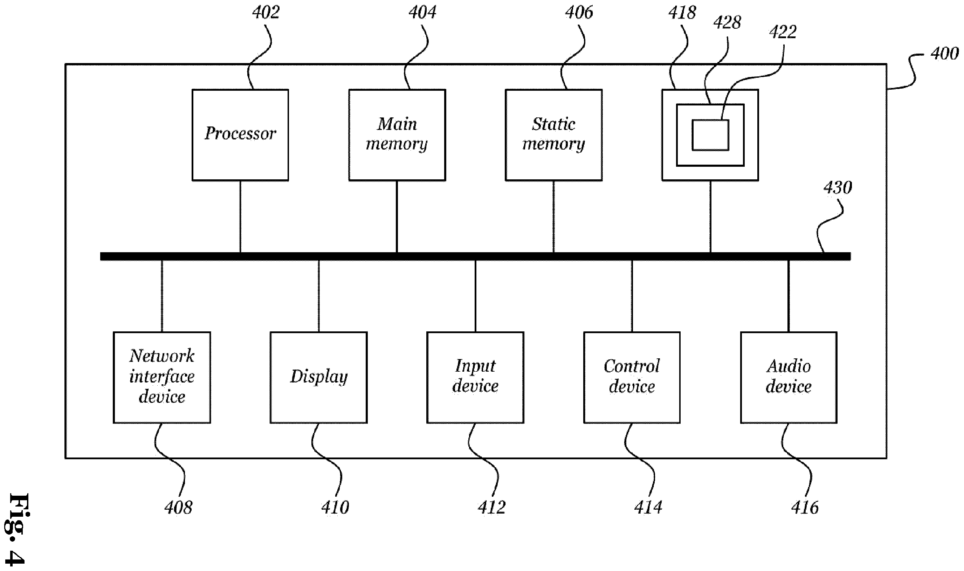

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Conveyor port with a first conveyor belt system

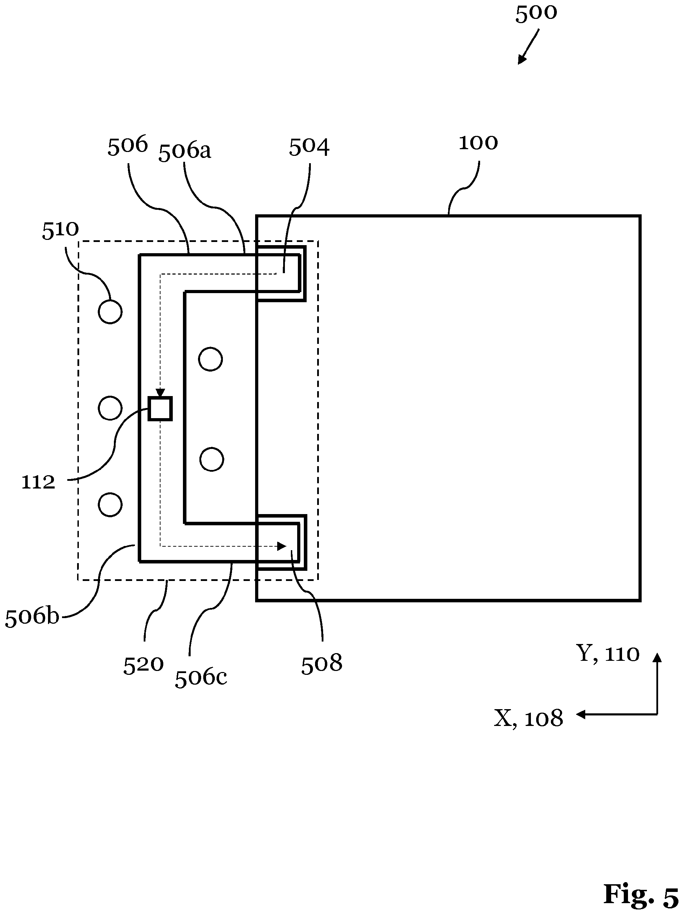

Referring to Fig. 5, an automated storage and retrieval system 500 according to an embodiment of the present disclosure is shown in a plan view. The automated storage and retrieval system 500 comprises a storage grid 100 configured to store one or more bins 112 therein, and a port 520 located on one side of the grid 100, i.e. at a periphery of the grid. The components of the port 520 are described in more detail below and are indicated by the dashed box in Fig. 5.

The grid 100 may be, for example, the grid 100 described in relation to Fig. 1. The port 520 comprises a first conveyor belt system 506. The first conveyor belt system 506 may comprise one or more conveyor belts arranged such that a bin may be continuously carried by the belt(s) from a first position 504 of the grid towards a second position 508 of the grid. As an example, the conveyor belt system 506 may comprise three conveyor belts. A first conveyor belt 506a carries storage containers from the first position 504 directly away from the grid 100. A second conveyor belt 506b carries storage containers from the first conveyor belt 506a in a direction generally parallel to the side of the grid 100 on which the port 520 is arranged. A third conveyor belt 506c carries storage containers from the second conveyor belt 506b back to the grid at the second position 508. The first conveyor belt system 506 may further comprise guiding means (e.g. barriers) arranged generally along the sides of each conveyor belt so that a bin can pass from one conveyor belt of the first conveyor belt system 506 to another conveyor belt of the same system 506. The first conveyor belt system 506 may carry bins from the first position 504 towards the second position 508 for example by way of one or more rollers, by way of a carrying medium looped around two or more pulleys, by any combination thereof, or by any other suitable means. In general, the skilled person would be aware of various means suitable for implementing a conveyor belt system configured to carry items from one position to another position.

With reference to Fig. 1, certain columns 102 of the grid 100 may be dedicated to a particular function of the automated storage and retrieval system 500. For example, certain columns 102 may be port columns 126, 128 that are respectively for removing bins 112 from (e.g. a 'drop-off' area of) the grid 100 and/or returning or delivering bins 112 to (e.g. a 'pick-up' area of) the grid 100. Turning back to Fig. 5, the first position 504 is a drop-off area of the grid 100 from which bins 112 are placed (or 'dropped off', e.g. by a robotic container-handling vehicle) onto the first conveyor belt system 506, and the second position 508 is a pick-up area of the grid 100 to which bins 112 carried by the first conveyor belt system 506 are delivered (or 'picked up', e.g. by a robotic container-handling vehicle). Thus, there is a port column 126, 128 associated with each of the first position 504 (or drop-off area) and the second position 508 (or pick-up area). In other words, the first conveyor belt system 506 is configured to receive a bin at the first position 504 by a robotic container-handling vehicle 122 lowering the bin 112 through a port column located above the first position 504 directly onto a conveyor belt of the first conveyor belt system 506. The first position 504 at which the bin 112 is received onto the conveyor belt is therefore located beneath a port column. Similarly, the first conveyor belt system 506 is configured to carry a bin 112 to the second position 508 which is located beneath a second port column 126, 128 of the grid. A robotic container-handling vehicle 122 can then retrieve the bin 112 directly from the conveyor belt at the second position 508 via the port column 126, 128 located above the second position 508.

In general, a robotic container-handling vehicle 122 of the automated storage and retrieval system 500 may deliver one or more bins 112 to the drop-off area 504 for placing onto the first conveyor belt system 506 by lowering, in the Z direction 114, said bins 112 in a port column 126, 128 of the grid 100 that is associated with the drop-off area 504. Similarly, a robotic container-handling vehicle 122 may receive one or more bins 112 from the pick-up area 508 for returning said bins 112 to the grid 100 by lifting, in the Z direction 114, said bins 112 in a port column 126, 128 of the grid 100 that is associated with the pick-up area 508.

The one or more bins 112 may comprise goods or items. A user of the automated storage and retrieval system 500 may place an order comprising, for example, a list of one or more goods stored in the grid 100 that the user wishes to retrieve from the grid 100. In order to fulfil such an order, the automated storage and retrieval system 500 may deliver bins 112 from the grid 100 to the port 520 in accordance with the list of one or more goods. These bins 112 may be carried along the first conveyor belt system 506 from the first position 504 to the second position 508, in between which goods may be removed from (or 'picked' from) the bins 112. In some embodiments, bin picking may be performed by human operators or robotic arms 510 (or a combination thereof) positioned adjacent to the first conveyor belt system 506. In other words, the robotic arms 510 and or human operators may be positioned generally along the sides of the conveyor belt system 506 so that the bins 112 travelling along the conveyor belt system may be picked from whilst the bins 112 are travelling. Alternatively, or in addition, human operators and/or robotic arms 510 may add goods into the bins 112 in order to introduce goods to the grid 100 or may remove bins 112 from the first conveyor belt system 506 entirely, for example for bin cleaning. In general, there may be one or more "stations" 510 located along the length of the conveyor belt system 506, at which a human or robotic operator may be positioned to interact with bins travelling along the conveyor belt system 506 or the items carried therein.

The order in which the bins 112 are delivered to the port 520 and the order in which they are subsequently picked (e.g. by humans and/or robotic arms 510) may be determined at least in part by properties of an associated order placed by the user. For example, if the order placed by the user comprises an ordered list of goods, then the order in which the bins 112 are delivered to the port 520 and subsequently picked may be determined at least in part based on: (i) the position of each good in the ordered list, and (ii) the bin or bins 112 with which each good is associated. More specifically, for example, if a user places an order for a first good stored in a first bin 112a and a second good stored in a second bin 112b, wherein the first bin 112a appears before the second bin 112b in the ordered list, then the automated storage and retrieval system 500 may first deliver the first bin 112a to the port 520 and then the second bin 112b to the port 520. In this example, the first bin 112a is therefore the first of the two bins 112a, 112b to be carried along the first conveyor belt system 506, and consequently, subsequent picking by humans and/or robotic arms 510 may first be performed for the first bin 112a and then for the second bin 112b. Alternatively, or in addition, multiple bins 112 may be picked simultaneously. For instance, if the port 520 comprises a first robotic arm 510 and a second robotic arm, then the first robotic arm 510 may pick from the first bin 112a while the second robotic arm simultaneously picks from the second bin 112b. In some examples, the order in which bins 112 are delivered to the port 520 and subsequently carried along the conveyor belt system 506 to be picked from may be agnostic of the order of items appearing on an order list. Instead, a control system associated with the automated storage and retrieval system may determine an optimally efficient order of bins 112 to be delivered to the port 520 based on the location of those bins 112 within the storage grid 100. In general, the use of a port 520 as disclosed comprising a conveyor belt system 506 that carries bins 112 from a first location 504 of the grid 100 to a second location 508 of the grid 100 facilitates the delivery of and picking from any number of bins 112 at the same time. The conveyor belt system 506 can simultaneously carry any number of bins 112 according to its length between the first 504 and second position 508, and allows for each of those bins 112 to be picked from simultaneously or substantially simultaneously using a plurality of stations 510 (e.g. robotic operators or human operators) arranged alongside the length of the conveyor belt system 506.

### Conveyor port with first and second conveyor belt systems

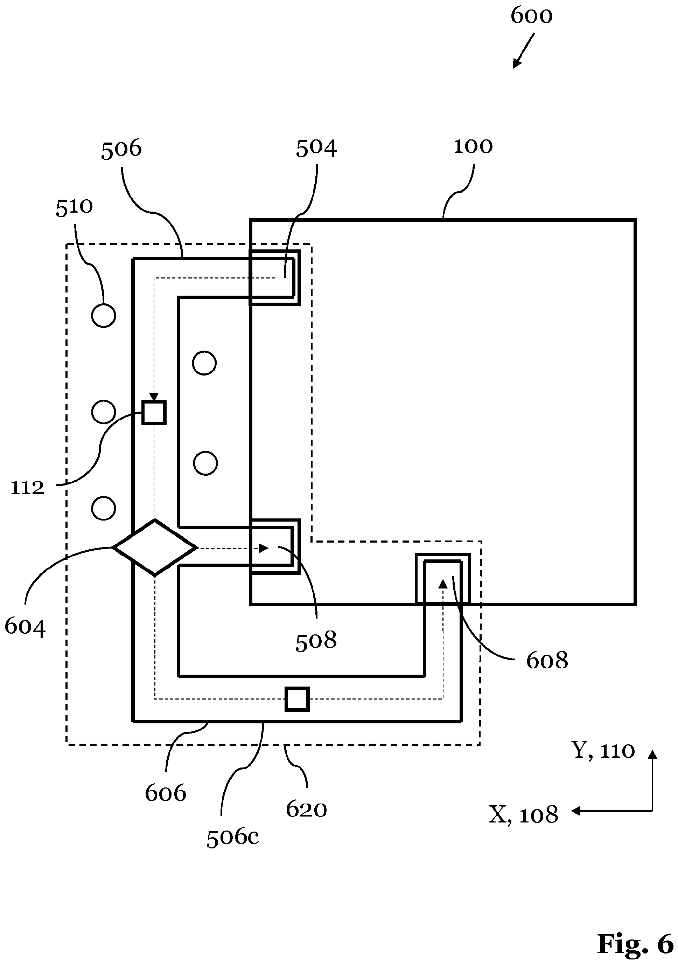

Referring now to Fig. 6, an automated storage and retrieval system 600 comprising an alternative port 620 according to some embodiments is depicted. As with the other embodiments, the port 520, 620 comprises a first conveyor belt system 506 configured to carry one or more bins 112 from a first position 504 of the grid 100 towards a second position 508 of the grid 100, wherein the first position 504 is configured to receive bins 112 from the grid 100 onto the first conveyor belt system 506 and the second position 508 is configured to return bins 112 at the second position 508 to the grid 100, and in between said positions 504, 508 goods may be removed from the bins 112. In this embodiment, the port 620 further comprises a second conveyor belt system 606 and a directing means 604.

The second conveyor belt system 606 may comprise one or more conveyor belts arranged such that a bin received from the first conveyor belt system 506 may be continuously carried by the belt(s) of the second conveyor belt system 606 towards a third position 608 of the grid. The second conveyor belt system 606 may further comprise guiding means (e.g. barriers) arranged generally along the sides of each conveyor belt so that a bin can pass from one conveyor belt of the second conveyor belt system 606 to another conveyor belt of the same system 606. The second conveyor belt system 606 may carry bins for example by way of one or more rollers, by way of a carrying medium looped around two or more pulleys, by any combination thereof, or by any other suitable means. In general, the skilled person would be aware of various means suitable for implementing a conveyor belt system configured to carry items from one position to another position.

In other words, the second conveyor belt system 606 is configured to receive a bin from the first conveyor belt system 606 and is configured to carry a bin 112 to the third position 608 which is located beneath another port column of the grid (a different port column to the port columns that are located above the first and second positions as described above). A robotic container-handling vehicle 122 can then retrieve the bin 112 directly from the second conveyor belt system at the third position 608 via the port column located above the third position 608.

The directing means 604 is configured to: (i) direct certain ones of the one or more bins 112 being carried along the first conveyor belt system 506 onto the second conveyor belt system 606 before said bins 112 reach the second position 508; and to (ii) direct other ones of the one or more bins 112 being carried along the first conveyor belt system 506 towards the second position. The second conveyor belt system 606 is configured to carry bins 112 received from the first conveyor belt system 506 towards a third position 608 of the grid 100.

The directing means 604 may be controlled by a directing controller that is configured to determine whether a bin 112 travelling along the first conveyor belt system 506 should be directed onto the second conveyor belt system 606 or, alternatively, whether the bin 112 should continue along the first conveyor belt system 506 towards the second position 508. This determination may be based at least in part on properties associated with the bins. For instance, each bin 112 may comprise a means for identifying the bin 112, and a control system may store information about each bin 112, such as the type of bin 112 and information about goods stored therein. On identifying the bin 112, the control system may instruct the directing means accordingly. More specifically, the identifying means may be a unique identifier, for example a barcode or QR code that may be scanned by an optical system in communication with the directing controller, or the identifying means may be an RF or NFC tag that may be read by an RF or NFC reader in order to identify the bin 112.

The automated storage and retrieval system 600 of Fig. 6 may further comprise a restocking station configured to restock bins 112 carried by the second conveyor belt system 606 prior to the bins reaching the third position 608. One or more robotic arms 510 configured to restock bins 112 may be positioned at the restocking station or adjacent to the second conveyor belt system 606. Alternatively, or in addition, the restocking station may be configured to allow one or more human operators to restock bins 112 by placing items in the bins 112. In one example, restocking may comprise: (i) identifying, by the identifying means, a bin 112; (ii) retrieving, by a control system, a database comprising information on the goods stored within the bin 112; (iii) determining, by the control system and based on the information stored within the database, whether the bin 112 needs restocking; (iv) when the control system determines that the bin 112 needs restocking, causing a directing controller to cause the bin 112 to be directed by directing means onto the second conveyor belt system 606 (instead of being returned to the grid 100 at the second position 508 by the first conveyor belt system), and then carrying, by the second conveyor belt system 606, the bin 112 to the restocking station before it is returned to the grid 100 at the third position 608; and (v) when the control system determines that the bin 112 does not need restocking, causing a directing controller to cause the bin 112 to be directed by directing means along the first conveyor belt system towards the second position 508 where the bin 112 is returned to the grid 100.

### Method of operation

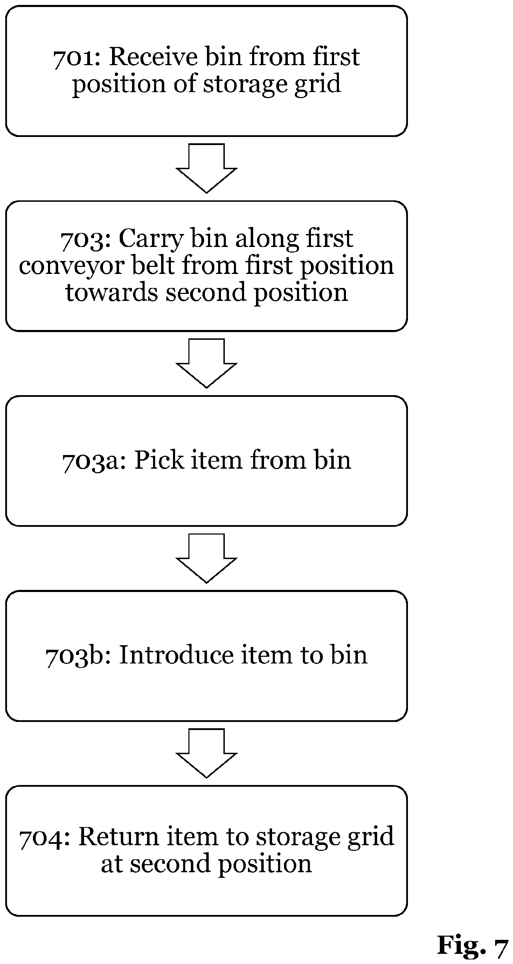

Referring now to Fig. 7, a flowchart depicting a method 700 for the transport of bins or storage containers stored in a storage grid of an automated storage and retrieval system(e.g. the system described in relation to either of Fig. 5 and Fig. 6) is shown. The method 700 comprises a first step 701 of receiving a bin 112 from a first position 504 (e.g. a drop-off area) of the storage grid 100 onto a first conveyor belt system 506.

After step 700, the method 700 moves to step 703, in which the first conveyor belt system 506 carries the bin 112 from the first position 504 towards a second position 508 (e.g. a pick-up area) of the grid 100. Step 703 may be performed for a first bin 112 while any of steps 701 and step 702 is simultaneously being performed for a second bin 112. That is, the method 700 may comprise carrying 703, by the first conveyor belt system 506, a bin 112 from the first position 504 towards the second position 508 while at the same time another bin 112 is being received 701 from the grid 100 at the first position 504 and/or while another bin 112 is being moved 702 (e.g. by a robotic swing arm) from the first position 504 to the first conveyor belt system 506.

After step 703, the method 700 moves first to at least one of steps 703a and 703b before then moving to step 704. The method 700 may therefore, for example, perform: step 703 followed by step 703a followed by step 704; or alternatively, step 703 followed by step 703b followed by step 704; or alternatively, both step 703a and step 703b (in any order) followed by step 704.

At step 703a, at least one item is picked from the one or more bins 112 being carried along the first conveyor belt system 506 from the first position 504 towards the second position 508. As described in relation to Fig. 5, picking may be performed by humans or robotic arms 510 (or a combination thereof) positioned adjacent to the first conveyor belt system 506.

At step 703b, at least one item is added to the one or more bins 112 being carried along the first conveyor belt system 506 from the first position 504 towards the second position 508. As described in relation to Fig. 5, adding items to the bins 112 may be performed by humans and/or robotic arms 510 (or a combination thereof) positioned adjacent to the first conveyor belt system 506.

At step 704, once the one or more bins 112 reach the second position 508, said bins 112 are returned to the grid 100, for example by a robotic container-handling vehicle that retrieves the bin(s) 112 directly from the conveyor belt system at the second position 508 via a port column located above the second position 508.

The method 700 may further comprise directing, by a directing means of the port 520, 620, certain ones of the one or more bins 112 onto a second conveyor belt system 606, wherein the second conveyor belt system 606 is configured to carry said bins 112 towards a third position 608. As described in relation to Fig. 6, the port 520, 620 may comprise a directing controller configured to determine whether a bin 112 is directed onto the second conveyor belt system 606 or alternatively whether the bin 112 is carried along the first conveyor belt system 506 towards the second position 508. The method 700 may therefore direct the bins 112 by way of the directing controller. The method 700 may additionally comprise restocking the bins 112 (e.g. as is described in relation to Fig. 5 and Fig. 6) prior to the bins 112 reaching the third position 608.

Whilst the method described above refers to passage of a bin 112 from a first position 504 (e.g. a drop-off area) to a second position 508 (e.g. a pick-up area), it would be appreciated that the method can be reversed to enable passage of a bin 112 from the second position 508 to the first position 504 (e.g. the first position 504 and second position 508, or the drop-off area and the pick-up area respectively, may be configured in such a way that they are interchangeable).

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A port for an automated storage and retrieval system, the automated storage and retrieval system comprising a storage grid configured to store one or more storage containers therein, the port comprising:
a first conveyor belt system configured to carry at least one of the one or more storage containers from a first position of the storage grid towards a second position of the storage grid;
wherein the port is configured to:
receive, at the first position, a storage container from the storage grid onto the first conveyor belt system; and
return, at the second position, from the first conveyor belt system, the storage container to the storage grid.

2. The port of claim 1, further comprising:
a second conveyor belt system; and
a directing means;
wherein the directing means is configured to:
direct certain ones of the one or more storage containers being carried along the first conveyor belt system onto the second conveyor belt system before said storage containers reach the second position; and
direct other ones of the one or more storage containers being carried along the first conveyor belt system towards the second position; and
wherein the second conveyor belt system is configured to carry storage containers received from the first conveyor belt system towards a third position of the storage grid; and optionally, wherein the port further comprises a restocking station configured to restock storage containers carried by the second conveyor system belt prior to the storage containers reaching the third position.

3. The port of claim 2, wherein the second conveyor belt system comprises one or more conveyor belts arranged to carry storage containers from the first conveyor belt system towards the third position of the grid.

4. The port of any one of claims 1-3, further comprising:
one or more robotic arms positioned adjacent to and alongside the first conveyor belt system, each robotic arm configured to remove items from and/or introduce items to any of the one or more storage containers travelling along the first conveyor belt system.

5. The port of any preceding claim, wherein the first conveyor belt system comprises one or more conveyor belts arranged to carry the one or more storage containers from the first position to the second position.

6. An automated storage and retrieval system, comprising:
a storage grid comprising one or more storage containers stored therein; and
the port of any one of claims 1-5.

7. The automated storage and retrieval system of claim 6, further comprising:
a rail system arranged on top of the storage grid, the rail system comprising a first set of rails and a second set of rails, wherein the rails of the first set of rails extend in a first direction and the rails of the second set of rails extend in a second direction; and
one or more robotic container-handling vehicles, configured to travel along one first and second sets of rails and to transport the one or more storage containers along the top of the storage grid;
wherein the one or more robotic container-handling vehicles are configured to:
lift and lower storage containers in a third direction;
place any one of the one or more storage containers onto the first conveyor belt system at the first position by lowering said storage container in the third direction through a first column of the storage grid; and
pick up, through a second column of the storage grid, any one of the one or more storage containers from the first conveyor belt system at the second position.

8. The automated storage and retrieval system of claim 6 or 7, wherein the port is further configured to receive, at the first position, a storage container from the storage grid directly onto the first conveyor belt system through a column of the storage grid located above the first position.

9. The automated storage and retrieval system of any one of claims 6 to 8, wherein the port is further configured to return, at the second position, the storage container to the storage grid directly from the first conveyor belt system at the second position through a column of the storage grid located above the second position.

10. The automated storage and retrieval system of any one of claims 6 to 9 when dependent on claim 2, wherein the port is further configured to return, at the third position, the storage container to the storage grid directly from the second conveyor belt system at the third position through a column of the storage grid located above the third position.

11. A method for the transport of storage containers stored in a storage grid of an automated storage and retrieval system, the method comprising:
receiving, at a first position of the storage grid, one or more storage containers onto a first conveyor belt;
carrying, along the first conveyor belt system, the one or more storage containers from the first position towards a second position of the storage grid;
wherein prior to the one or more storage containers reaching the second position, the method comprises:
picking, from the one or more storage containers, at least one item; and/or
introducing, to the one or more storage containers, at least one item; and
wherein once the one or more storage containers reach the second position, the method comprises:
returning, at the second position of the storage grid, the one or more storage containers to the storage grid.

12. The method of claim 11, wherein the automated storage and retrieval system comprises:
a rail system arranged on top of the storage grid, the rail system comprising a first set of rails and a second set of rails, wherein the rails of the first set of rails extend in a first direction and the rails of the second set of rails extend in a second direction; and
one or more robotic container-handling vehicles, configured to travel along one first and second sets of rails and to transport the one or more storage containers along the top of the storage grid; and wherein
moving the one or more storage containers from the first position to the first conveyor belt system comprises lowering, by one of the one or more robotic container-handling vehicles, the one or more storage containers from the first position onto the first conveyor belt system; and
returning the one or more storage containers to the storage grid comprises lifting, by one of the one or more robotic container-handling vehicles, the one or more storage containers from the first conveyor belt system at the second position.

13. The method of claim 11 or 12, wherein the picking of at least one item from the one or more storage containers occurs while the one or more storage containers are travelling along the first conveyor belt system from the first position to the second position of the storage grid.

14. The method of any one of claims 11-13, wherein prior to the one or more storage containers reaching the second position, the method comprises:
directing, by a directing means, certain ones of the one or more storage containers onto a second conveyor belt system, wherein the second conveyor belt system is configured to carry said storage containers towards a third position; and optionally
restocking the certain ones of the one or more storage containers prior to said storage containers reaching the third position.

15. A computer-readable medium comprising instructions which, when executed on one or more processors, cause the one or more processors to carry out the method of any one of claims 11-14.
